# EUROPÄISCHE PATENTSCHRIFT

(11) **EP 1 840 002 B1**
(45) Veröffentlichungstag und Bekanntmachung des Hinweises auf die Patenterteilung: **14.01.2009**
(21) Anmeldenummer: 06022977.0
(22) Anmeldetag: 04.11.2006
(51) Int. Cl.: B62D 21/15, B62D 25/02

(54) **Kraftfahrzeug mit einem Deformationselement zur Aufnahme von Seitenaufprallkräften im Seitenbereich des Kraftfahrzeuges**
Motor vehicle with a deformable element for absorbing side impact forces in the side region of the vehicle
Véhicule automobile avec un élément déformable pour absorber les chocs latéraux dans la zone latérale du véhicule

(30) Priorität: 31.03.2006 DE 102006014961
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Schiebel, Dieter, 70825 Korntal-Münchigen (DE); Baumann, Peter, 75249 Kieselbronn (DE); Söllner, Michael, 71120 Grafenau-Döffingen (DE)

(56) Entgegenhaltungen:
- DE-A1- 19 943 296
- DE-A1-6102004 014 79
- DE-C1- 19 716 223
- US-A- 4 934 751

## Beschreibung

Die vorliegende Erfindung bezieht sich auf ein Kraftfahrzeug mit einem Deformationselement zur Aufnahme von Seitenaufprallkräften im Seitenbereich des Kraftfahrzeuges, gemäß Oberbegriff des Patentanspruchs 1, wie es aus der DE 199 43 296 A1 bekannt ist. Das bekannte Deformationselement weist eine einzige Hohlkammer und einen Befestigungsabschnitt auf, der der Anbringung an einem Seitenschwellerabschnitt dient. Die axiale Erstreckung der Hohlkammer ist in etwa senkrecht zu der Wirkrichtung von Seitenaufprallkräften ausgerichtet.

Obwohl auf beliebige Fahrzeuge und beliebige Bereiche des Fahrzeuges anwendbar, werden die vorliegende Erfindung sowie die ihr zugrunde liegende Problematik in Bezug auf einen Seitenbereich eines Personenkraftfahrzeuges näher erläutert.

Es wurden bereits verschiedene Lösungen zur Verbesserung des Seitenkollisionsschutzes von Fahrgastzellen vorgeschlagen. Die meisten konzentrieren sich dabei auf die Verstärkung der Türen durch Einbau von Verstärkungselementen zwischen der äußeren und der inneren Seitenwand der Tür in Form von Rohrkonstruktionen, profilierten Platten oder Ähnlichem. Dadurch soll eine starre Konstruktion erzielt werden, die unter einer bestimmten Belastung lediglich einer gewissen maximalen Verformung unterliegt. In bestimmten Fällen sind die Türen in ihrem untersten Teil auch mit Verstärkungselementen versehen, um die Bodenschiene der Fahrgastzelle als Stützelement einzusetzen. Weiter wurden Türverstärkungselemente derart angeordnet, dass sie Anschläge gegen den Sitzrahmen bilden.

Den bekannten Seitenverstärkungskonstruktionen ist nachteilig gemeinsam, dass bei Seitenkollisionen eine lediglich geringe Masse des gesamten Fahrzeugs, das durch ein anderes Fahrzeug kollidiert wird, zur Verfügung steht, um im Anfangsstadium die Aufprallenergie aufzunehmen. Prinzipiell stehen nur der Verformungswiderstand der Tür bzw. des kollidierten Karosserieseitenteils und zusätzlich die Massenträgheit des Sitzes und des Insassen der einwirkenden Kraft entgegen, nachdem diese im Verlauf der Verformung der Tür bzw. des Karosserieteils mit der inneren Wand davon in Berührung gelangt sind. Der geringe Verformungswiderstand der Tür oder des Karosserieseitenteils des Fahrzeugs, das kollidiert wurde, bewirkt zunächst lediglich eine geringe Geschwindigkeitsreduzierung des auffahrenden Fahrzeugs. Der Insasse oder der Sitz wird deshalb durch die eine hohe Geschwindigkeit aufweisende Türseite bzw. durch das eine hohe Geschwindigkeit aufweisende Karosserieteil berührt und einer hohen Beschleunigung relativ zum eigenen Fahrzeug während der weiteren Deformation unterworfen, bevor das kollidierende und das kollidierte Fahrzeug gemeinsame Endgeschwindigkeiten erreichen.

In der Druckschrift US 4,934,751 ist eine Seitenwandstruktur eines Kraftfahrzeuges beschrieben, in welcher ein Deformationselement angeordnet ist, das mehrere, übereinander angeordnete und in Fahrzeuglängsrichtung verlaufende Kammern aufweist.

Ein derartiges Deformationselement dient lediglich einer geringfügigen Verbesserung der Aufnahme von in Fahrzeugquerrichtung wirkenden Deformationsenergien über einen großflächigen Bereich des Karosserieseitenteils.

Der vorliegenden Erfindung liegt die Aufgabe zugrunde, ein Kraftfahrzeug mit einem Deformationselement im Seitenbereich des Kraftfahrzeuges zu schaffen, welches eine verbesserte Aufnahme von Seitenaufprallkräften bzw. von Seitenaufprallenergien auf einfache und kostengünstige Weise gewährleistet.

### VORTEILE DER ERFINDUNG

Diese Aufgabe wird erfindungsgemäß durch das Kraftfahrzeug mit dem Deformationselement mit den Merkmalen gemäß Patentanspruch 1 gelöst.

Die der vorliegenden Erfindung zugrunde liegende Idee besteht darin, dass das Deformationselement zur Aufnahme von Seitenaufprallkräften im Seitenbereich eines Kraftfahrzeuges mindestens zwei in Wirkrichtung der Seitenaufprallkräfte hintereinander angeordnete Hohlkammern, deren axiale Erstreckung jeweils in etwa senkrecht zu der Wirkrichtung der Seitenaufprallkräfte ausgerichtet ist, und mindestens einen Befestigungsabschnitt für eine Anbringung des Deformationselementes an einem zugeordneten Seitenschwellerabschnitt des Fahrzeugs aufweist.

Somit weist die vorliegende Erfindung gegenüber den oben genannten Ansätzen den Vorteil auf, dass die Hohlkammern des Deformationselementes in Richtung der wirkenden Seitenaufprallkräfte bzw. der Aufprallenergien derart hintereinander angeordnet sind, dass Aufprallenergie von allen vorgesehenen Hohlkammern aufgenommen werden kann. Vorteilhaft erfolgt über den gesamten Deformationsweg ein konstanter Energieabbau. Dadurch wird insgesamt im Falle einer Seitenkollision ein besserer Seitenaufprallschutz gewährleistet, da jede einzelne Hohlkammer einen Beitrag zur Energieaufnahme leistet. Durch ein derartiges Deformationselement kann die Energieaufnahme bei einem vorbestimmten Einbauvolumen für das Deformationselement optimiert werden.

In den Unteransprüchen finden sich vorteilhafte Ausgestaltungen und Verbesserungen des im Patentanspruch 1 angegebenen Deformationselementes.

Gemäß einer bevorzugten Weiterbildung ist das Deformationselement als Strangpressprofil ausgeführt und in vertikaler Richtung auf einer zugeordneten Schwellerverstärkung abgestützt und daran befestigt. Vorzugsweise weist das Deformationselement in Seitenaufprallrichtung gesehen drei hintereinander angeordnete Hohlkammern auf, welche unterschiedliche Querschnittsprofile besitzen. Die seitlichen Wände des Deformationselementes sind vorteilhaft zum Gewährleisten der unterschiedlichen Querschnittsprofile wellenförmig bzw. wellblechartig ausgebildet, wobei die beiden äußeren Hohlkammern einen größeren Querschnitt als die mittige Hohlkammer aufweisen. Das Deformationselement ist vorteilhaft im Bereich des B-Säule und in Wirkrichtung einer zugeordneten Querversteifung eines Sitzquerträgers für den Seitenaufprallschutz angeordnet.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht eines Deformationselementes gemäß einem bevorzugten Ausführungsbeispiel der vorliegenden Erfindung;
- Figur 2: eine Draufsicht auf das Deformationselement aus Figur 1;
- Figur 3: eine Rückansicht des Deformationselementes aus den Figuren 1 und 2;
- Figur 4: eine rechtsseitige Ansicht des Deformationselementes aus den Figuren 1 bis 3;
- Figur 5: eine perspektivische Ansicht einer Seitenschwellerverstärkung gemäß einem bevorzugten Ausführungsbeispiel der vorliegenden Erfindung;
- Figur 6: eine Querschnittsansicht eines auf der Schwellerverstärkung gemäß Figur 5 aufgesetzten Deformationselementes gemäß einem bevorzugten Ausführungsbeispiel der vorliegenden Erfindung; und
- Figur 7: eine perspektivische Teilansicht einer Fahrzeugkarosserie mit integriertem Deformationselement gemäß einem bevorzugten Ausführungsbeispiel der vorliegenden Erfindung.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

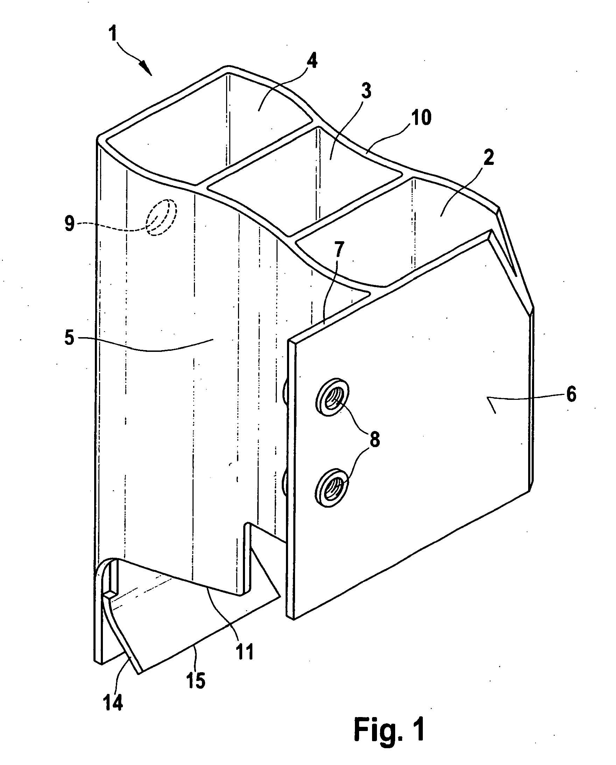

Wie in den Figuren 1 bis 4 ersichtlich ist, besteht das Deformationselement 1 aus drei in Wirkrichtung der Deformationskräfte hintereinander angeordneten Hohlkammern - einer der Fahrzeuginnenseite zugewandten inneren Hohlkammer 2, einer mittleren Hohlkammer 3 und einer der Fahrzeugaußenseite zugewandten äußeren Hohlkammer 4. Es ist allerdings für einen Fachmann offensichtlich, dass das erfindungsgemäße Deformationselement auch aus lediglich zwei oder mehr als drei in Wirkrichtung hintereinander angeordneten Hohlkammern bestehen kann.

Die drei Hohlkammern 2, 3 und 4 sind vorzugsweise bei einer Montage an einem zugeordneten Seitenschweller-Verstärkungselement in Wirkrichtung der Seitenaufprallkräfte derart hintereinander angeordnet, dass jede der drei Hohlkammern 2, 3 und 4 einen Beitrag zur Aufnahme der zu absorbierenden Aufprallenergie leistet. Des Weiteren erstrecken sich die Hohlkammern 2, 3, 4 bei einer Montage an dem zugeordneten Seitenschweller-Verstärkungselement in etwa vertikaler Richtung, das heißt senkrecht zu der Längserstreckung des Seitenschweller-Verstärkungselementes, wobei sich das Deformationselement 1 vorzugsweise auf dem Seitenschweller-Verstärkungselement abstützt und an diesem in geeigneter Weise befestigt ist, was weiter unten ausführlicher erläutert wird.

Das Deformationselement 1 ist vorzugsweise als Strangpressprofil aus einer geeigneten Aluminiumlegierung oder dergleichen hergestellt. Derartige Leichtmetalllegierungen weisen eine hohe Steifigkeit und ein geringes Gewicht auf und sind somit im Kraftfahrzeugbau besonders geeignet.

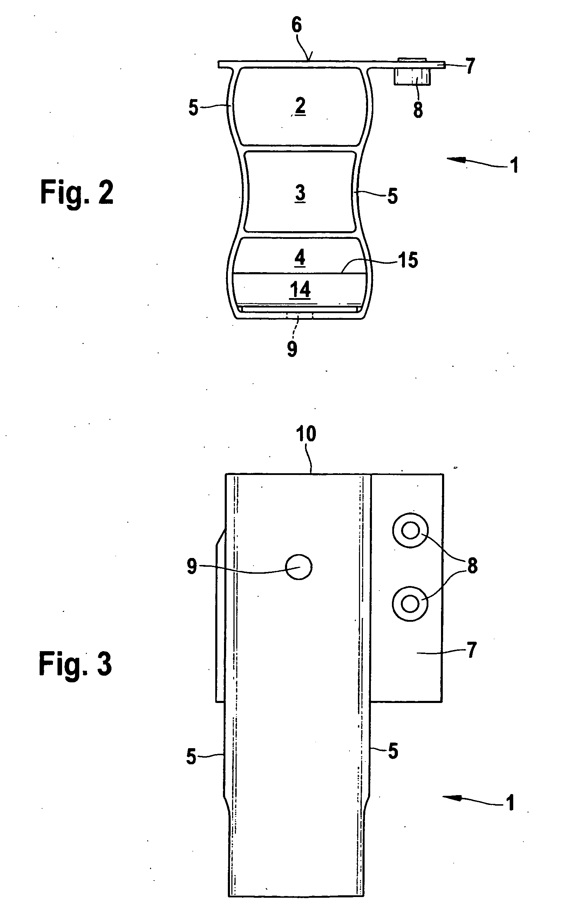

Die in Fahrzeugquerrichtung verlaufenden Seitenwände 5 des Deformationselementes 1 besitzen vorzugsweise eine wellenförmige Ausgestaltung, wie insbesondere in den Figuren 1 und 2 illustriert ist. Vorteilhaft weisen die Seitenwände 5 im Bereich der inneren Hohlkammer 2 und der äußeren Hohlkammer 4 Wellenberge und im Bereich der mittleren Hohlkammer 3 Wellentäler derart auf, dass die in Figur 1 dargestellte Ziehharmonikaform der hintereinander angeordneten Hohlkammern 2, 3 und 4 gewährleistet ist. Die innere Hohlkammer 2 sowie die äußere Hohlkammer 4 sind aufgrund der in diesen Bereichen vorgesehenen Wellenberge der wellenförmigen Seitenwände 5 mit einem größeren Querschnittsprofil ausgebildet als die mittlere Hohlkammer 3, die im Bereich der Wellentäler der wellenförmigen Seitenwände 5 vorgesehen sind. Die Querschnittsprofile der inneren Hohlkammer 2 und der äußeren Hohlkammer 4 sind hingegen mit einem in etwa gleich großen Querschnittsprofil ausgestaltet. Dadurch entsteht bei einer Krafteinwirkung auf die Stirnseite der äußeren Hohlkammer 4 im Falle eines Seitenunfalls ein Ziehharmonikaeffekt, welcher eine gleichmäßige und definiert ablaufende Deformation des Deformationselementes 1 bewirkt. Es erfolgt über den gesamten Deformationsweg ein konstanter und definierter Energieabbau der auftretenden Deformationsenergie, so dass ein verbesserter Seitenaufprallschutz geschaffen wird.

Gemäß dem vorliegenden Ausführungsbeispiel weisen die drei Hohlkammern 2, 3 und 4 in etwa gleiche Tiefenabmessungen in Fahrzeugquerrichtung auf, so dass über den gesamten Deformationsweg ein in etwa konstanter Energieabbau gewährleistet ist.

Des Weiteren umfasst das Deformationselement 1 vorzugsweise eine Anlagefläche 6 an dem stirnseitigen Ende der inneren Hohlkammer 2, wobei die Anlagefläche 6 einer Anlage des Deformationselementes 1 an einem zugeordneten Karosserieseitenteil dient. Die Anlagefläche 6 ist beispielsweise zu mindestens einer Seite des Deformationselementes 1 hin vorstehend ausgebildet, um einen Abschnitt 7 mit beispielsweise zwei Nietmuttern 8 zu liefern. Über die Nietmuttern 8 kann das Deformationselement 1 an einem Kopplungselement eines zugeordneten Querversteifungselementes 19 befestigt werden. Dadurch kann eine Krafteinleitung in die Fahrzeugkarosserie bei einem Seitenaufprall sowohl über das Seitenschweller-Verstärkungselement 12 erfolgen, als auch über das Kopplungselement des Querversteifungselementes 19.

Ferner umfasst das Deformationselement 1 beispielsweise an der Stirnseite der äußeren Hohlkammer 4 ein mittiges Befestigungsloch 9, welches zur Aufnahme in einer Positioniervorrichtung während eines Positionierungsprozess, beispielsweise während eines Anschweißens des Deformationselements 1 an dem Seitenschweller-Verstärkungselement 12, dient.

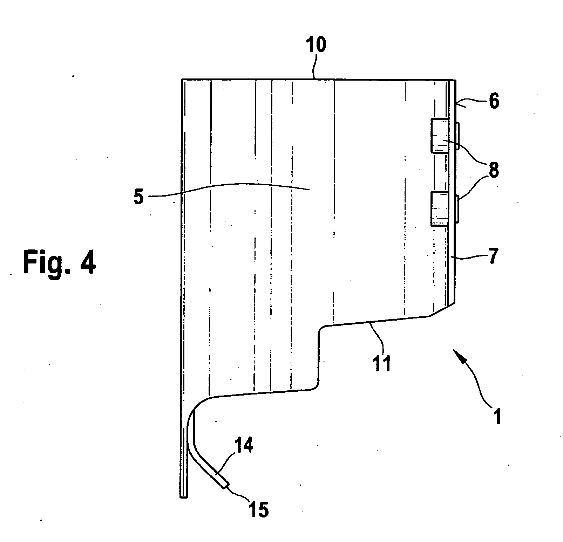

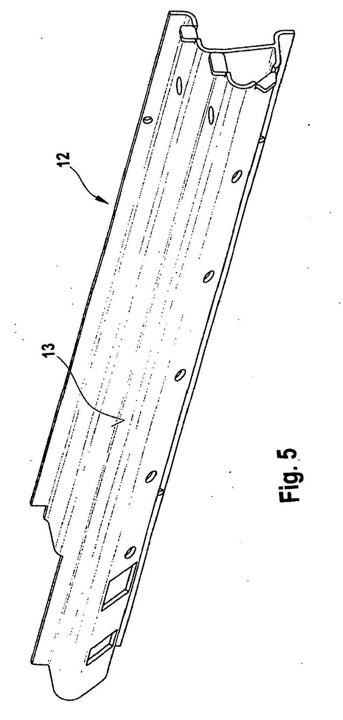

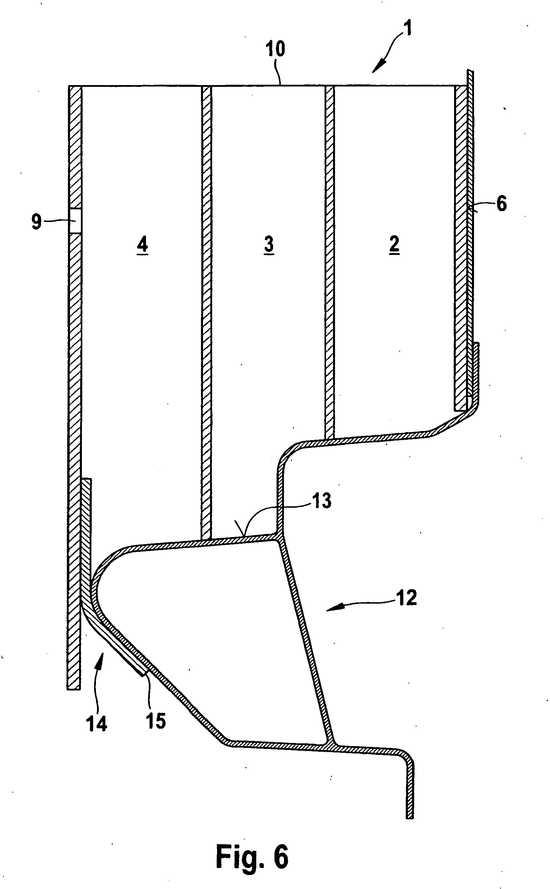

Wie insbesondere in Figur 4 ersichtlich ist, ist vorzugsweise die Oberseite 10 des Deformationselementes 1 eben und die Unterseite 11 des Deformationselementes stufenartig für eine geeignete Abstützung an einem zugeordneten Seitenschweller-Verstärkungselement 12 ausgebildet, welcher beispielhaft in Figur 5 in perspektivischer Ansicht dargestellt ist. Die stufenartige Ausgestaltung der Unterseite 11 des Deformationselementes 1 ist vorzugsweise komplementär zu der stufenförmigen Oberfläche 13 des zugeordneten Seitenschweller-Verstärkungselementes 12 für eine bündige Abstützung an demselben ausgebildet, wie in Figur 6 in einer Querschnittsdarstellung schematisch illustriert ist.

Des Weiteren weist das Deformationselement 1 in dem unteren, der Fahrzeugaußenseite zugewandten Bereich einen Befestigungsabschnitt 14 auf, welcher beispielsweise als zur Fahrzeuginnenseite schräg abgewinkelter Flansch ausgebildet ist. Der Befestigungsabschnitt 14, wie insbesondere in Figur 1 dargestellt ist, umfasst eine Kante 15 zur Befestigung des Befestigungsabschnitts 14 und somit des Deformationselementes 1 an dem zugeordneten Seitenschweller-Verstärkungselement 12 mittels vorzugsweise eines Schweißverfahrens. Es ist für einen Fachmann offensichtlich, dass auch andersartige, gängige Verbindungsverfahren für eine Anbringung des Deformationselementes an dem zugeordneten Seitenschweller-Verstärkungselement 12 oder unter Umständen an einem zugeordneten Karosserieseitenteil möglich sind.

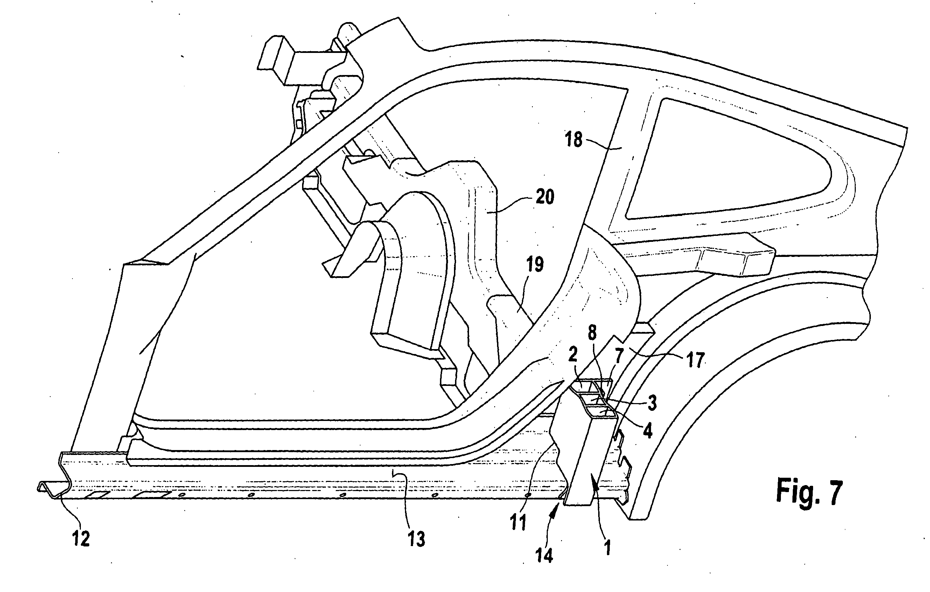

Figur 7 illustriert eine perspektivische Ansicht des an einem zugeordneten Seitenschweller-Verstärkungselement 12 aufgesetzten und daran befestigten Deformationselementes 1, welches sich zudem in Anlage mit einem zugeordneten inneren Karosserieseitenteil 17 befindet. Vorzugsweise ist das Deformationselement 1 im Bereich der B-Säule 18 mit einer vertikalen Ausrichtung der Hohlkammern 2, 3, 4 derart vorgesehen, dass es dem zugeordneten Querversteifungselement 19 auf der Rückseite des inneren Karosserieseitenteils 17 in Wirkrichtung der Seitenaufprallkräfte direkt gegenüberliegt. Dadurch wird ein Lastpfad über die Deformationselemente 1, die zugeordneten inneren Karosserieseitenteile 17, die Querversteifungselemente 19 und einen mittleren Sitzquerträger 20 von einem Deformationselement auf das gegenüberliegende Deformationselement gewährleistet. Die vorliegende Erfindung schafft mit dem erfindungsgemäßen Deformationselement folglich eine verbesserte Querversteifung einer Querträgerstruktur und eine erhöhte Insassensicherheit im Falle von Seitenkollisionen aufgrund einer verbesserten Absorption der entstehenden Aufprallenergien.

Obwohl die vorliegende Erfindung anhand bevorzugter Ausführungsbeispiele vorstehend beschrieben wurde, ist sie darauf nicht beschränkt, sondern auf vielfältige Weise modifizierbar.

## Patentansprüche

1. Kraftfahrzeug mit einem Deformationselement (1) zur Aufnahme von Seitenaufprallkräften im Seitenbereich des Kraftfahrzeuges, mit einer Hohlkammer, deren axiale Erstreckung in etwa senkrecht zu der Wirkrichtung der Seitenaufprallkräfte ausgerichtet ist; und mit mindestens einem Befestigungsabschnitt (14) für eine Anbringung des Deformationselementes (1) an einem zugeordneten Seitenschwellerabschnitt (12) des Kraftfahrzeugs, **dadurch gekennzeichnet, dass** das Deformationselement (1) mindestens zwei in Wirkrichtung der Seitenaufprallkräfte hintereinander angeordneten Hohlkammern (2, 3, 4) aufweist, deren axiale Erstreckung jeweils in etwa senkrecht zu der Wirkrichtung der Seitenaufprallkräfte ausgerichtet ist.

2. Kraftfahrzeug nach Anspruch 1, **dadurch gekennzeichnet, dass** das Deformationselement (1) in Anlage mit einem zugeordneten inneren Karosserieseitenteil (17) im Bereich der B-Säule (18) und auf Höhe eines zugeordneten seitlichen Querversteifungselementes (19) bringbar und auf einem zugeordneten Seitenschweller-Verstärkungselement (12) montierbar ist.

3. Kraftfahrzeug nach anspruch 1 oder 2, **dadurch gekennzeichnet, dass** das Deformationselement (1) drei in Wirkrichtung der Seitenaufprallkräfte hintereinander und parallel zueinander angeordnete Hohlkammern (2, 3, 4) aufweist, von welchen eine als der Fahrzeuginnenseite zugewandte innere Hohlkammer (2), eine als der Fahrzeugaußenseite zugewandte äußere Hohlkammer (4) und eine zwischen der äußeren und der inneren Hohlkammer (2, 4) angeordnete mittlere Hohlkammer (3) ausgebildet ist.

4. Kraftfahrzeug nach Anspruch 2 oder 3, **dadurch gekennzeichnet, dass** sich die Hohlkammern (2, 3, 4) axial in etwa senkrecht zur Längserstreckung des zugeordneten Seitenschweller-Verstärkungselementes (12) und in etwa senkrecht zur Längserstreckung des zugeordneten seitlichen Querversteifungselementes (19) erstrecken.

5. Kraftfahrzeug nach wenigstens einem der vorhergehenden Ansprüche, **dadurch gekennzeichnet, dass** Seitenwände (5) des Deformationselementes 1 zum Ausbilden der Hohlkammern (2, 3, 4) mit unterschiedlichen Querschnittsprofilen wellenförmig ausgebildet sind.

6. Kraftfahrzeug nach wenigstens einem der Ansprüche 3 bis 5, **dadurch gekennzeichnet, dass** eine äußere und eine innere Hohlkammer (2, 4) jeweils größere Querschnittsprofile aufweisen als eine mittlere Hohlkammer (3) des Deformationselements (1).

7. Kraftfahrzeug nach Anspruch 5 oder 6, **dadurch gekennzeichnet; dass** die Hohlkammern (2, 3, 4) in etwa gleiche Tiefenabmessungen aufweisen, wobei die innere und die äußere Hohlkammer (2, 4) im Bereich der Wellenberge und die mittlere Hohlkammer (3) im Bereich der Wellentäler der wellenförmigen Seitenwände (5) derart vorgesehen sind, dass die innere und die äußere Hohlkammer (2, 4) in etwa gleiche Breiten aufweisen und mit größeren Breiten als die mittlere Hohlkammer (3) ausgebildet sind.

8. Kraftfahrzeug nach wenigstens einem der vorhergehenden Ansprüche, **dadurch gekennzeichnet, dass** eine dem zugeordneten Seitenschweller-Verstärkungselement (12) zugewandte Unterseite (11) des Deformationselementes (1) mit einer zu dem Profil des zugeordneten Seitenschweller-Verstärkungselementes (12) komplementären, stufenförmigen Ausgestaltung für eine geeignete Abstützung an demselben ausgebildet ist.

9. Kraftfahrzeug nach wenigstens einem der vorhergehenden Ansprüche, **dadurch gekennzeichnet, dass** das Deformationselement (1) als Strangpressprofil, beispielsweise aus einer Leichtmetalllegierung wie insbesondere einer Aluminiumlegierung, ausgebildet ist.

10. Kraftfahrzeug nach wenigstens einem der vorhergehenden Ansprüche, **dadurch gekennzeichnet, dass** der mindestens eine Befestigungsabschnitt (14) als im unteren Bereich des Deformationselementes (1) vorgesehener und in Richtung des zugeordneten Seitenschweller-Verstärkungselementes (12) weisender Flanschabschnitt ausgebildet ist, welcher eine Kante (15) zur Befestigung des Deformationselementes (1) an dem zugeordneten Seitenschweller-Verstärkungselement (12) mittels eines Schweißverfahrens aufweist.

11. Kraftfahrzeug nach wenigstens einem der vorhergehenden Ansprüche, **dadurch gekennzeichnet, dass** die innere Hohlkammer (2) eine Anlagefläche (6) für eine Anlage an einem zugeordneten inneren Karosserieseitenteil (17) aufweist.

12. Kraftfahrzeug nach wenigstens einem der vorhergehenden Ansprüche, **dadurch gekennzeichnet, dass** eine Anlagefläche (6) des Deformationselementes (1) einen seitlichen Abschnitt (7) mit Nietmuttern (8) für eine Anbindung an einem Kopplungselement eines Querversteifungselementes (19) aufweist.

## Claims

1. Motor vehicle with a deformation element (1) for absorbing lateral impact forces in the lateral region of the motor vehicle, with a hollow chamber, the axial extension of which is oriented approximately at right angles to the direction of action of the lateral impact forces, and with at least one fastening portion (14) for mounting the deformation element (1) on an associated lateral sill portion (12) of the motor vehicle, **characterized in that** the deformation element (1) has at least two hollow chambers (2, 3, 4) arranged one behind another in the direction of action of the lateral impact forces, the axial extension of which is in each case oriented approximately at right angles to the direction of action of the lateral impact forces.

2. Motor vehicle according to Claim 1, **characterized in that** the deformation element (1) can be brought into contact with an associated inner body side part (17) in the region of the B pillar (18) and at the level of an associated lateral transverse stiffening element (19) and can be mounted on an associated lateral sill reinforcement element (12).

3. Motor vehicle according to Claim 1 or 2, **characterized in that** the deformation element (1) comprises three hollow chambers (2, 3, 4) arranged parallel to one another and one behind another in the direction of action of the lateral impact forces, of which one is designed as an inner hollow chamber (2) facing the vehicle interior, one is designed as an outer hollow chamber (4) facing the vehicle exterior, and one is designed as a central hollow chamber (3) arranged between the outer and the inner hollow chambers (2, 4).

4. Motor vehicle according to Claim 2 or 3, **characterized in that** the hollow chambers (2, 3, 4) extend axially approximately at right angles to the longitudinal extension of the associated lateral sill reinforcement element (12) and approximately at right angles to the longitudinal extension of the associated lateral transverse stiffening element (19).

5. Motor vehicle according to at least one of the preceding claims, **characterized in that** the side walls (5) of the deformation element (1) are of undulating design for forming the hollow chambers (2, 3, 4) with different cross-sectional profiles.

6. Motor vehicle according to at least one of Claims 3 to 5, **characterized in that** the outer and the inner hollow chambers (2, 4) in each case have larger cross-sectional profiles than a central hollow chamber (3) of the deformation element (1).

7. Motor vehicle according to Claim 5 or 6, **characterized in that** the hollow chambers (2, 3, 4) have approximately the same depth dimensions, the inner and the outer hollow chambers (2, 4) being provided in the region of the wave crests and the central hollow chamber (3) being provided in the region of the wave troughs of the undulating side walls (5) in such a way that the inner and the outer hollow chambers (2, 4) have approximately the same widths and are designed with greater widths than the central hollow chamber (3) .

8. Motor vehicle according to at least one of the preceding claims, **characterized in that** the lower side (11) of the deformation element (1), which faces the associated lateral sill reinforcement element (12), is designed with a step-shaped form complementary to the profile of the associated lateral sill reinforcement element (12) for appropriate support thereon.

9. Motor vehicle according to at least one of the preceding claims, **characterized in that** the deformation element (1) is designed as an extruded profile, for example made from a light metal alloy such as in particular an aluminum alloy.

10. Motor vehicle according to at least one of the preceding claims, **characterized in that** the at least one fastening portion (14) is designed as a flange portion which is provided in the lower region of the deformation element (1), points in the direction of the associated lateral sill reinforcement element (12) and comprises an edge (15) for fastening the deformation element (1) to the associated lateral sill reinforcement element (12) by means of a welding process.

11. Motor vehicle according to at least one of the preceding claims, **characterized in that** the inner hollow chamber (2) comprises a bearing surface (6) for bearing against an associated inner body side part (17).

12. Motor vehicle according to at least one of the preceding claims, **characterized in that** a bearing surface (6) of the deformation element (1) comprises a lateral portion (7) with rivet nuts (8) for attachment to a coupling element of a transverse stiffening element (19).

## Revendications

1. Véhicule automobile comprenant un élément de déformation (1) pour recevoir des forces d'impact latérales dans la région latérale du véhicule automobile, comprenant une chambre creuse, dont l'étendue axiale est orientée approximativement perpendiculairement à la direction d'action des forces d'impact latérales ; et comprenant au moins une portion de fixation (14) pour monter l'élément de déformation (1) sur une portion de bas de marche latérale associée (12) du véhicule automobile, **caractérisé en ce que** l'élément de déformation (1) présente au moins deux chambres creuses (2, 3, 4) disposées l'une derrière l'autre dans la direction d'action des forces d'impact latérales, dont l'étendue axiale est orientée à chaque fois approximativement perpendiculairement à la direction d'action des forces d'impact latérales.

2. Véhicule automobile selon la revendication 1, **caractérisé en ce que** l'élément de déformation (1) peut être amené en appui avec une partie latérale interne associée de la carrosserie (17) dans la région de la colonne B (18) et à la hauteur d'un élément de renforcement latéral associé (19), et peut être monté sur un élément de renforcement associé (12) du bas de marche latéral.

3. Véhicule automobile selon la revendication 1 ou 2, **caractérisé en ce que** l'élément de déformation (1) présente trois chambres creuses (2, 3, 4) disposées parallèlement les unes aux autres et les unes derrière les autres dans la direction d'action des forces d'impact latérales, dont une est réalisée sous forme de chambre creuse interne (2) tournée vers le côté interne du véhicule, une est réalisée sous forme de chambre creuse extérieure (4) tournée vers le côté externe du véhicule, et une est réalisée sous forme de chambre creuse centrale (3) disposée entre la chambre creuse externe et la chambre creuse interne (2, 4).

4. Véhicule automobile selon la revendication 2 ou 3, **caractérisé en ce que** les chambres creuses (2, 3, 4) s'étendent axialement approximativement perpendiculairement à l'étendue longitudinale de l'élément de renforcement associé (12) du bas de marche et approximativement perpendiculairement à l'étendue longitudinale de l'élément de renforcement transversal latéral associé (19).

5. Véhicule automobile selon au moins l'une quelconque des revendications précédentes, **caractérisé en ce que** les parois latérales (5) de l'élément de déformation (1) sont réalisées sous forme ondulée pour créer les chambres creuses (2, 3, 4) avec des profilés différents en section transversale.

6. Véhicule automobile selon au moins l'une quelconque des revendications 3 à 5, **caractérisé en ce qu'**une chambre creuse externe et une chambre creuse interne (2, 4) présentent à chaque fois des profilés en section transversale plus grand qu'une chambre creuse centrale (3) de l'élément de déformation (1).

7. Véhicule automobile selon la revendication 5 ou 6, **caractérisé en ce que** les chambres creuses (2, 3, 4) présentent approximativement les mêmes dimensions en profondeur, la chambre creuse interne et la chambre creuse externe (2, 4) étant prévues dans la région des sommets d'ondulation et la chambre creuse centrale (3) étant prévue dans la région des creux d'ondulation des parois latérales (5) de forme ondulée, de telle sorte que la chambre creuse interne et la chambre creuse externe (2, 4) présentent approximativement les mêmes largeurs et soient réalisées avec des largeurs plus grandes que la chambre creuse centrale (3).

8. Véhicule automobile selon au moins l'une quelconque des revendications précédentes, **caractérisé en ce qu'**un côté inférieur (11) de l'élément de déformation (1) tourné vers l'élément de renforcement associé (12) du bas de marche latéral est réalisé avec une configuration de forme étagée complémentaire du profil de l'élément de renforcement associé (12) du bas de marche latéral, pour un support approprié contre celuici.

9. Véhicule automobile selon au moins l'une quelconque des revendications précédentes, **caractérisé en ce que** l'élément de déformation (1) est réalisé sous forme de profilé filé, par exemple en un alliage de métal léger, comme en particulier un alliage d'aluminium.

10. Véhicule automobile selon au moins l'une quelconque des revendications précédentes, **caractérisé en ce que** l'au moins une portion de fixation (14) est réalisée sous forme de portion de bride prévue dans la région inférieure de l'élément de déformation (1) et tournée dans la direction de l'élément de renforcement associé (12) du bas de marche latéral, ladite portion de bride présentant une arête (15) pour la fixation de l'élément de déformation (1) à l'élément de renforcement associé (12) du bas de marche latéral au moyen d'un procédé de soudage.

11. Véhicule automobile selon au moins l'une quelconque des revendications précédentes, **caractérisé en ce que** la chambre creuse interne (2) présente une surface d'appui (6) pour une application contre une partie latérale interne associée (17) de la carrosserie.

12. Véhicule automobile selon au moins l'une quelconque des revendications précédentes, **caractérisé en ce qu'**une surface d'appui (6) de l'élément de déformation (1) présente une portion latérale (7) avec des écrous rivetés (8) pour une liaison à un élément d'accouplement d'un élément de renforcement transversal (19).
